# EUROPÄISCHE PATENTSCHRIFT

(11) **EP 1 694 536 B1**
(45) Veröffentlichungstag und Bekanntmachung des Hinweises auf die Patenterteilung: **25.02.2009**
(21) Anmeldenummer: 04802971.4
(22) Anmeldetag: 16.12.2004
(51) Int. Cl.: B60R 21/16, B60R 21/26

(54) **AIRBAGEINRICHTUNG FÜR EIN KRAFTFAHRZEUG**
AIRBAG DEVICE FOR A MOTOR VEHICLE
DISPOSITIF AIRBAG POUR UN VEHICULE A MOTEUR

(30) Priorität: 19.12.2003 DE 10361887
(43) Veröffentlichungstag der Anmeldung: 30.08.2006
(73) Patentinhaber: Takata-Petri AG, 63743 Aschaffenburg (DE)
(72) Erfinder: LUBE, Thomas, 12589 Berlin (DE)
(74) Vertreter: Baumgärtel, Gunnar
(86) Internationale Anmeldenummer: PCT/DE2004/002786
(87) Internationale Veröffentlichungsnummer: WO 2005/058654

(56) Entgegenhaltungen:
- EP-A- 0 945 314
- DE-A1- 19 810 537
- GB-A- 2 306 409

## Beschreibung

Die Erfindung betrifft eine Airbageinrichtung für ein Kraftfahrzeug nach dem Oberbegriffs des Anspruchs 1.

Eine derartige Airbageinrichtung umfasst einen aufblasbaren Gassack; einen Gasgenerator zum Aufblasen des Gassackes; ein Ventil zum Ablassen von Gas aus dem (zumindest teilweise aufgeblasenen) Gassack; ein bewegliches Stellglied des Ventils, das zum Öffnen des Ventils betätigbar ist, so dass Gas aus dem Gassack abgelassen werden kann; sowie einen Auslösemechanismus zur Betätigung des Stellgliedes (zum Öffnen des Ventils) durch Erzeugung von Druck.

Das Aufblasen des Gassackes mittels des zugeordneten Gasgenerators erfolgt in einem Crash-Fall, um das Verletzungsrisiko eines Fahrzeuginsassen zu reduzieren. In Abhängigkeit von bestimmten Parametern, wie zum Beispiel der Größe des zu schützenden Fahrzeuginsassen, der Position des Fahrzeuginsassen zum Zeitpunkt eines Unfalles, der Relativgeschwindigkeit zwischen dem Insassen und dem Fahrzeug als Folge eines Unfalles und dergl., kann zum Schutz des jeweiligen Fahrzeuginsassen eine Reduzierung des Innendruckes des Gassackes verglichen mit dem Druck, der beim vollständigen Aufblasen des Gassackes mittels des zugeordneten Gasgenerators erreichbar ist, vorteilhaft sein.

Zur Reduzierung des Innendruckes des Gassackes, gesteuert in Abhängigkeit von den vorgenannten Parametern, ist die Verwendung von Ventilanordnungen bekannt, mit denen Gas aus dem aufzublasenden Gassack in einer Richtung weg von dem zu schützenden Fahrzeuginsassen in einen Bereich hinter bzw. unter dem jeweiligen Airbagmodul ausgelassen und abgeleitet werden kann. Der Kontakt des jeweiligen Fahrzeuginsassen mit den aus dem Gassack ausströmenden, möglicherweise heißen Gasen, ist hierbei zu vermeiden.

Das Öffnen der Ventilanordnung kann bereits vor Aktivierung des Gasgenerators erfolgen, um beim Aufblasen des Gassackes schon zu Beginn Ausströmöffnungen zur Verfügung zu stellen, durch die hindurch aus dem Gasgenerator austretende Gase abströmen können. Hierdurch wird der im Gassack mittels des Gasgenerators erzeugte Druck von Anfang an reduziert. Eine solche Steuerung der Ventilanordnung kann z.B. dann besonders vorteilhaft sein, wenn mittels eines hierfür vorgesehenen Sensors (beispielsweise eines Gewichtssensors an einem Fahrzeugsitz) erkannt wird, dass es sich bei dem zu schützenden Fahrzeuginsassen, um eine besonders kleine, leichte Person handelt.

Bei einer aus der GB 230 64 09 A bekannten Airbageinrichtung der eingangs genannten Art ist das Stellglied als eine drehbar gelagerte Scheibe ausgebildet, der zur Betätigung eine pyrotechnisch auslösbare Kolben-Zylinder-Einheit (in Form eines in einem Zylinder geführten Stößels) zugeordnet ist. Die Kolben-Zylinder-Einheit ist dabei in der Ebene des durch eine drehbare Scheibe gebildeten Stellgliedes angeordnet und bewirkt bei Auslösung eine solche Drehbewegung des Stellgliedes, dass an dem Stellglied vorgesehene Durchgangsöffnungen zur Überdeckung mit Abströmöffnungen eines zugeordneten Ventilgrundkörpers gebracht werden, um das Ausströmen von Gas aus dem Gassack zu ermöglichen. Hierbei besteht jedoch das Problem, dass durch den Platzbedarf der Kolben-Zylinder-Einheit der für die Abströmöffnungen zur Verfügung stehende Raum reduziert wird. Dies ist insbesondere bei Fahrerairbagmodulen nachteilig, da diese in der Ebene senkrecht zur gewünschten Gasaustrittsrichtung in der Regel nur einen geringen Querschnitt aufweisen.

Die vorbeschriebenen Effekte gelten auch für die aus der US 2003/0025309 A1 bekannte Airbaganordnung, bei der ein durch eine Ringscheibe gebildetes Stellglied eines Ventils einer Airbaganordnung ebenfalls durch eine Kolben-Zylinder-Einheit betätigt wird.

Aus der EP 0 945 314 A2 ist eine Aufprall-Schutzvorrichtung für Fahrzeuginsassen bekannt, bei der zur Steuerung des Abströmverhaltens eines Airbags dieser eine Gasauslassöffnung mit einstellbarem Querschnitt aufweist. Der Querschnitt der Gasauslassöffnung wird auf einen Maximalwert begrenzt. Beim Aufblasen ist anfangs die Gasauslassöffnung vollständig geschlossen und nach der Aktivierung des Airbags wird sie auf den eingestellten, maximalen Querschnitt selbsttätig geöffnet.

In der DE 198 39 283 A1 wird ein Airbag-Modul mit einem Gassack, einem Gasgenerator und einem Ventil zum Ablassen von Gas aus dem Gassack beschrieben. Mittels einer sensorgesteuerten pyrotechnischen Einheit wird ein Druckgas erzeugt, mit dem zwei in einem Ringkanal des Ventils angeordnete Schieber bewegt werden, bis diese an einem in dem Ringkanal angeordneten Anschlagelement anstoßen, wodurch eine Öffnung in dem Ventil zum Ablassen von Gas in die Umgebung vollständig geöffnet wird.

Der Erfindung liegt daher das Problem zugrunde, eine Airbageinrichtung der eingangs genannten Art zu schaffen, die eine Vergrößerung des Abströmquerschnittes für gegebenenfalls abzulassendes Gas ermöglicht.

Dieses Problem wird erfindungsgemäß durch die Schaffung einer Airbageinrichtung mit den Merkmalen des Anspruchs 1 gelöst.

Danach setzt eine als Auslösemechanismus dienende sensorgesteuerte pyrotechnische Einheit zur Betätigung des Stellgliedes des Ventils ein Druckgas frei, das unmittelbar auf eine Druckangriffsfläche des Stellgliedes einwirkt. Damit die mittels des Auslösemechanismus freigesetzten Druckgase mit einem hinreichend großen Druck auf das Stellglied einwirken können, so dass dieses eine Bewegung ausführt, auf Grund derer das Ventil öffnet, ist dem Auslösemechanismus ein Druckraum zugeordnet, in den zumindest ein Teil der freigesetzten Gase geleitet wird und bei dem zumindest ein Teil einer Begrenzungswand durch die Druckangriffsfläche des Stellgliedes gebildet wird. In diesem Druckraum baut sich beim Freisetzen des aus dem Auslösemechanismus stammenden Druckgases ein Überdruck auf, der auf die Druckangriffsfläche des beweglich gelagerten Stellgliedes einwirkt und hierdurch eine Bewegung des Stellgliedes entlang der Wirkrichtung des Druckes (also im Wesentlichen senkrecht zur Druckangriffsfläche) herbeiführt.

Dies bedeutet, dass die von dem Auslösemechanismus freisetzbaren Druckgase auf eine zugeordnete Angriffsfläche des Stellgliedes (Druckangriffsfläche) einwirken können, ohne dass zuvor eine zusätzliche, aus mittels der freigesetzten Druckgase relativ zueinander beweglichen Bauteilen bestehende Funktionseinheit, wie zum Beispiel eine Kolben-Zylinder-Einheit betätigt werden müsste. Dementsprechend wirken erfindungsgemäß die durch den Auslösemechanismus freigesetzten Druckgase entweder auf eine einstückig am Stellglied ausgebildete Angriffsfläche oder eine (separate) fest hiermit verbundene Angriffsfläche ein.

Hierdurch wird der Aufbau der zur Betätigung des Stellgliedes vorgesehenen Anordnung vereinfacht sowie deren Platzbedarf reduziert, so dass mehr Raum für die Bildung von Ausströmöffnungen zur Verfügung steht, durch die hindurch in Abhängigkeit der Werte bestimmter Parameter Gas aus dem Gassack abgelassen werden kann.

Das Ventil kann dabei entweder zur Bildung der alleinigen Ausströmöffnungen der Airbageinrichtung vorgesehen sein oder es können an der Airbageinrichtung zusätzlich zu dem Ventil noch weitere Ausströmöffnungen, z.B. am Gassack selbst, vorgesehen sein.

Für die Bildung eines hinreichend großen Druckes ist der Druckraum allseitig gasdicht verschlossen.

Der Ventilgrundkörper und das zum Öffnen des Ventils bewegliche Stellglied sind,jeweils mit Durchgangsöffnungen versehen sind. Diese Durchgangsöffnungen sind derart zueinander positioniert, dass sie vor dem Freisetzten von Druckgas mittels des Auslösemechanismus einander nicht überdecken und somit kein Abströmen von Gas aus dem Gassack in die Umgebung gestatten. Wird jedoch von dem Auslösemechanismus Druckgas freigesetzt, um das Stellglied des Ventils zu betätigen, so bewegt sich dieses in eine Position, in der die Durchgangsöffnungen des Stellgliedes einerseits und des Ventilgrundkörpers andererseits einander überdecken, so ; dass diese als Ausströmöffnungen wirken, durch die hindurch Gas aus dem Gassack austreten kann. Die durch die Einwirkung des durch den Auslösemechanismus freigesetzten Druckgases auf die Druckangriffsfläche des Stellgliedes ausgelöste Bewegung des Stellgliedes wird hierbei durch zwei miteinander in Eingriff bringbare Anschläge (zum Beispiel am Stellglied einerseits und am Ventilgrundkörper andererseits) derart begrenzt, dass beim in Eingriff treten der einander zugeordneten Anschläge die Durchgangsöffnungen des Stellgliedes einerseits und des Ventilgrundkörpers andererseits sich gerade überdecken.

Gemäß einer bevorzugten Ausführungsform der Erfindung ist der Druckraum am Ventilgrundkörper ausgebildet, so dass dessen Begrenzungswände zum einen durch den Ventilgrundkörper und zum anderen durch die Druckangriffsfläche des Stellgliedes gebildet werden. Der Druckraum kann dabei einerseits einstückig an dem Ventilgrundkörper angeformt sein oder alternativ durch einen separaten, am Ventilgrundkörper befestigten Druckbehälter gebildet werden. Ferner kann zum Verschließen des Druckraumes an dem Ventilgrundkörper eine zusätzliche Abdeckung anbringbar sein.

Der Ventilgrundkörper und das Stellglied sind bevorzugt jeweils scheibenförmig, insbesondere als Ringscheiben, ausgebildet, wobei das Stellglied bezüglich des Ventilgrundkörpers um eine senkrecht zur Scheibenebene verlaufende Achse verschwenkbar (verdrehbar) ist.

Die Druckangriffsfläche des Stellgliedes verläuft hierbei bevorzugt senkrecht zur Erstreckungsebene des scheibenförmigen Grundkörpers sowie des scheibenförmigen Stellgliedes selbst, so dass durch die auf die Druckangriffsfläche wirkenden Druckkräfte des vom Auslösemechanismus freigesetzten Druckgases eine Drehbewegung des Stellgliedes um eine senkrecht zu seiner Erstreckungsebene verlaufende Achse erzeugen können. Das Stellglied wird hierbei vorteilhaft am bzw. im Ventilgrundkörper geführt.

Zur vereinfachten Montage weisen das Stellglied und der Grundkörper einander zugeordnete Vorsprünge und Einbuchtungen auf, die bei Durchführung der Montage ineinander greifen und so beispielsweise das Aufsetzen des Stellgliedes auf den Ventilgrundkörper senkrecht zur Erstreckungsebene der beiden scheibenförmig ausgebildeten Bauelemente ermöglichen. Nach Abschluss der Montage können dann die vorteilhaft am Ventilgrundkörper vorgesehene Vorsprünge, welche das Stellglied am Rand übergreifen, als Führungsmittel zur Führung des Stellgliedes am Ventilgrundkörper dienen.

Das Stellglied weist bevorzugt eine Unterbrechung in seinem scheibenförmigen Körper auf, die einerseits durch die Druckangriffsfläche des Stellgliedes und andererseits durch den die Bewegung des Stellgliedes begrenzenden, stellgliedseitigen Anschlag begrenzt wird. Die Größe dieser Unterbrechung (entsprechend dem Abstand zwischen dem stellgliedseitigen Anschlag und der Druckangriffsfläche) bestimmt und begrenzt den Umfang der möglichen Bewegung des Stellgliedes relativ zu dem Ventilgrundkörper unter der Wirkung der vom Auslösemechanismus freigesetzten Druckgase.

Der durch die pyrotechnische Einheit gebildete Auslösemechanismus wird (vor, bei oder nach dem Aufblasen des Gassackes der Airbageinrichtung mittels eines zugeordneten Gasgenerators) durch eine (elektronische) Steuereinheit ausgelöst wird, wenn bestimmt Parameter, wie zum Beispiel die Größe eines Fahrzeuginsassen, das Gewicht eines Fahrzeuginsassen, die Position eines Fahrzeuginsassen usw. in einem vorgebbaren Wertebereich liegen.

Die Airbageinrichtung weist eine Abdeckung zum Verschließen einer großflächigen Öffnung auf, durch die hindurch sich der Gassack beim Aufblasen entfalten kann, zum Beispiel durch Aufreißen oder Umklappen der Abdeckung, und das Ventil ist auf der der Abdeckung gegenüber liegenden Seite der Airbageinrichtung angeordnet, so dass die aus dem aufzublasenden Gassack stammenden Gase durch das Ventil hindurch in einer Richtung weg von dem zu schützenden Insassen austreten können.

Zur Befestigung des Gassackes an bzw. in der Airbageinrichtung kann ein Haltering dienen, der der Fixierung des Einblasmundes des Gassackes dient. Um im Bedarfsfall eine möglichst große maximale Querschnittsfläche für aus dem Gassack abzulassendes Gas zur Verfügung zu stellen, soll der Einblasmund des Gassackes so fixiert werden, dass eine große effektive Fläche für austretendes Gas zur Verfügung steht. Hierzu kann entlang des Randes des Einblasmundes des Gassackes ein Verstärkungselement, insbesondere in Form eines Ringes, verlaufen, das den Rand des Einblasmundes in einer vorgebbaren Ringform stabilisiert, und das zur Befestigung des Gassackes an der Airbageinrichtung von dem Haltering übergriffen wird.

Der Haltering ist wiederum durch geeignete Befestigungsmittel, zum Beispiel in Form von Schrauben, an einer tragenden Baugruppe der Airbageinrichtung, wie zum Beispiel einem Trägerblech, festgelegt.

Der Haltering kann zusätzlich zu der Fixierung des Gassackes an der Airbageinrichtung auch zum Halten des Ventils dienen, zum Beispiel, indem das Ventil zwischen dem Haltering und derjenigen tragenden Baugruppe des Airbagmoduls aufgenommen wird, mit der der Haltering verbunden ist.

Ferner kann die, zum Beispiel durch eine Kunststoffkappe gebildete, Abdeckung der Airbageinrichtung an dem Haltering fixiert sein, indem Formschlusselemente (Rastelemente) des Halterings einerseits und der Abdeckung andererseits ineinander greifen. Bei den Formschlusselementen kann es sich beispielsweise um Vorsprünge (Laschen) an einer der beiden Baugruppen und zugeordnete Ausnehmungen an der anderen Baugruppe handeln.

Weitere Merkmale und Vorteile der Erfindung werden bei der nachfolgenden Beschreibung eines Ausführungsbeispieles anhand der Figuren deutlich werden.

Es zeigen:
- Figur 1: einen Querschnitt durch ein Airbagmodul mit einem Gassack, einem Gasgenerator zum Aufblasen des Gassackes sowie einem Ventil zum Ablassen von Gas aus dem Gassack;
- Figur 2: eine Explosionsdarstellung des Airbagmoduls aus Figur 1;
- Figur 3: eine Explosionsdarstellung des Ventils der Airbaganordnung aus Figur 1;
- Figur 4: einen ersten Schritt bei der Montage des Ventils aus Figur,3;
- Figur 5: einen zweiten Schritt bei der Montage des Ventils aus Figur 3;
- Figur 6: einen dritten, abschließenden Schritt bei der Montage des Ventils aus Figur 3;
- Figur 7: einen Ausschnitt des Ventils aus Figur 3 in einer Ausgangsposition, in der das Ventil nicht zum Ablassen von Gas aus dem Gassack geöffnet ist;'
- Figur 8: einen Ausschnitt des Ventils aus Figur 3 nach einer Betätigung, so dass das Ventil zum Ablassen von Gas aus dem Gassack geöffnet ist;
- Figur 9: einen Ausschnitt einer Abwandlung des Ventils aus Figur 3.

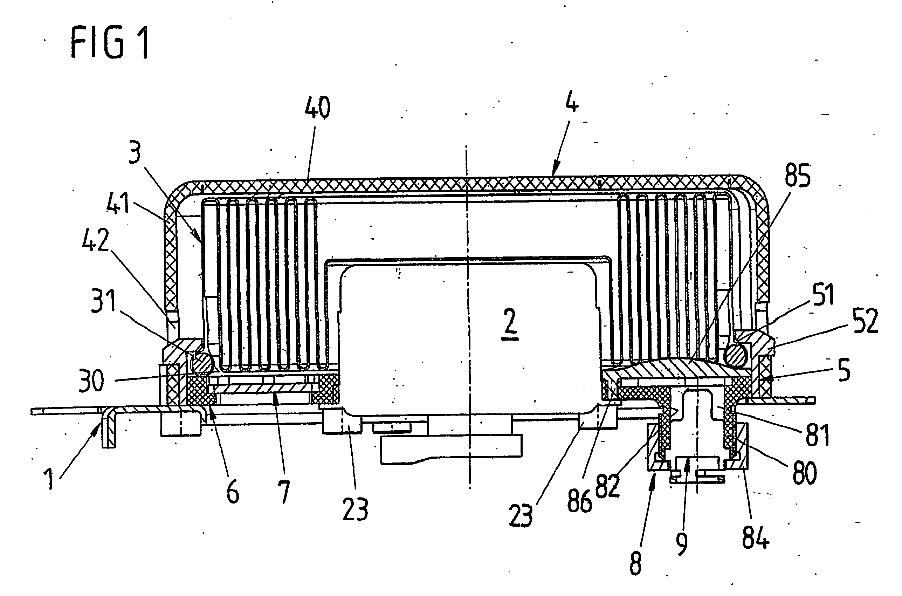

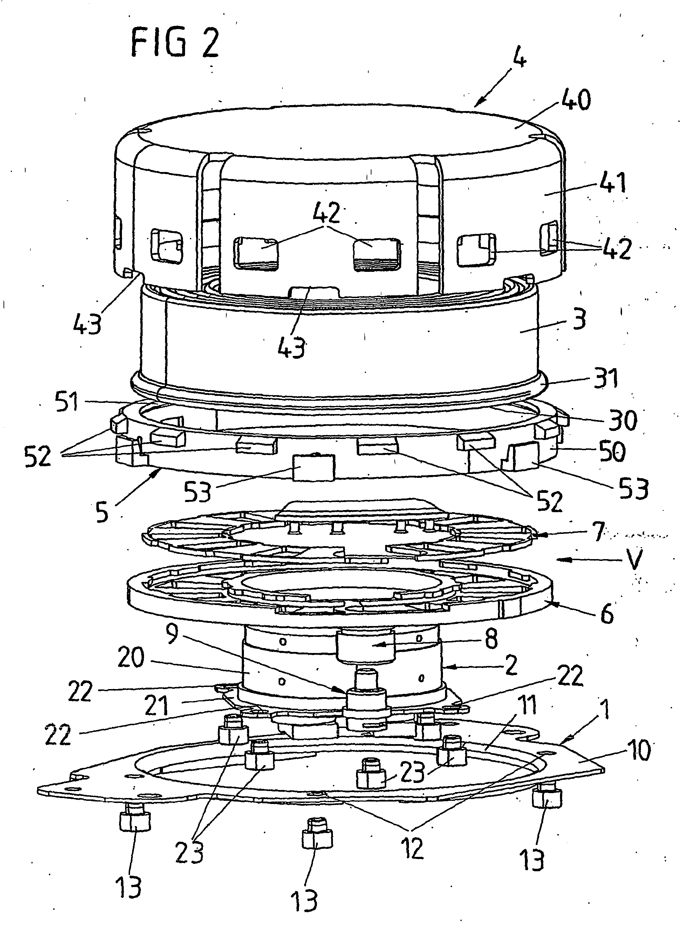

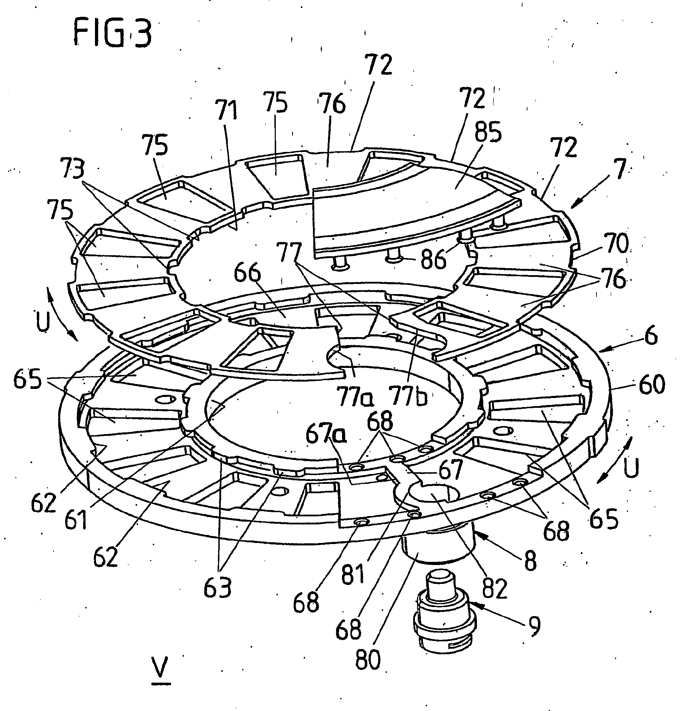

In den Figuren 1 bis 3 ist ein Airbagmodul dargestellt, dass einen Gassack 3, einen Gasgenerator 2 zum Aufblasen des Gassackes 3, eine Abdeckung 4 sowie ein Ventil V zum Ablassen von Gas aus dem Gassack 3 aufweist und das auf einem Träger 1 in Form eines Trägerbleches montiert ist.

Das Trägerblech 1 wird gebildet durch einen flachen, ringförmigen Trägerkörper 10, der einen im Wesentlichen kreisrunden Ausschnitt 11 umschließt und Befestigungsöffnungen 12 aufweist, durch die hindurch Befestigungsmittel 13 in Form von Befestigungsschrauben zur Befestigung eines Halteringes 5 greifen.

Der Gasgenerator 2 wird gebildet durch einen Generatortopf 20 und weist einen von dem Generatortopf 20 abstehenden Flansch 21 mit Befestigungsstellen 22 auf, durch die hindurch der Gasgenerator 2 mittels Befestigungselementen 22 in Form von Befestigungsschrauben am Grundkörper 6 des Ventils V befestigbar ist.

Der Gassack 3 ist als gefaltetes Gassackpaket radial neben der kreisförmig umlaufenden Außenwand des Generatortopfes 20 des Gasgenerators 2 untergebracht und weist eine sich oberhalb des Generatortopfes 20 erstreckende Gassacklage auf.

Der offene Einblasmund 30 des Gassackes 3 ist an seinem Rand mittels eines Verstärkungselementes 31 in Form eines Verstärkungsringes in einer kreisringförmigen Geometrie festgelegt und erstreckt sich dabei im Wesentlichen am äußeren Umfang des Airbagmoduls, so dass sich eine große offene Querschnittsfläche für das Auslassen von Gas aus dem Gassack durch den Einblasmund 30 hindurch ergibt. Durch diesen ragt auch der Gasgenerator 2 mit seinem Generatortopf 20 in das Innere des gefalteten Gassackes 3 hinein.

Der am Einblasmund 30 des Gassackes 3 vorgesehene, vom Gassackgewebe umschlossene Verstärkungsring 31 erstreckt sich in einem Hinterschnitt des am Trägerblech 1 befestigten Halteringes 5, wobei der Haltering 5 mit einem nach innen vorstehenden, ringförmig umlaufenden Vorsprung 51 den Verstärkungsring 31 des Gassackes 3 übergreift und dadurch den Gassack 3 formschlüssig am Airbagmodul festlegt. Die Fixierung des Gassackes 3 mit seinem durch einen Ring 31 verstärkten Einlassmund 30 am Randbereich der Airbageinheit ermöglicht neben der Maximierung des zur Verfügung stehenden Ausströmquerschnittes auch eine platzsparend Anordnung eines Auslösemechanismus 8, 9 für das Ventil V.

Der am äußeren Umfang des Airbagmoduls umlaufende Haltering weist ferner nach außen abstehende Laschen 53 auf, die mit Aussparungen 43 an einer von einer Basisfläche-40 abstehenden seitlichen Wand 41 der Abdeckung 4 zusammenwirken, um die Abdeckung 4 am Airbagmodul definiert zu positionieren. Zur Befestigung der Abdeckung 4 am Airbagmodul stehen von dem Haltering 5 nach außen Rastelemente 52 in Form von Vorsprüngen ab, die in zugeordnete Rastöffnungen 42 der seitlichen Wand 41 der Abdeckung 4 eingreifen.

An der der Basisfläche 40 der Abdeckung 4 abgewandten Seite (Unterseite) des gefalteten Gassackes 3 ist vor dem Einblasmund 30 des Gassackes 3 und innerhalb des von dem Haltering 5 umgriffenen Raumes ein durch einen scheibenförmigen Grundkörper 6 und ein Stellglied in Form einer Stellscheibe 7 gebildetes Ventil V angeordnet, das im geöffneten Zustand den Austritt von Gas aus dem Gassack 3 heraus (durch dessen Einblasmund 30 hindurch) erlaubt.

Der scheibenförmige Ventilgrundkörper 6 wird gebildet durch einen als Kunststoffspritzteil gestalteten, flachen, ringförmigen Körper 60, der eine kreisrunde Ausnehmung 61 umschließt und entlang seines Umfanges U abwechselnd mit Durchgangsöffnungen 65 und Zwischensegmenten 66 versehen ist.

Von dem äußeren und inneren Rand des ringförmigen Körpers 60 stehen nach innen jeweils Vorsprünge 62, 63 ab, die als Montagehilfe beim Zusammenbau des scheibenförmigen Ventilgrundkörpers 6 mit dem zugeordneten Stellglied 7 in Form einer Stellscheibe dienen.

Die Stellscheibe 7 wird ebenfalls gebildet durch einen flachen, ringförmigen Grundkörper 70, der eine kreisrunde Aussparung 71 umgibt und in Umfangsrichtung U abwechselnd mit Durchgangsöffnungen 75 und Zwischensegmenten 76 versehen ist. Die Durchgangsöffnungen 65, 75 des Ventilgrundkörpers 6 einerseits und der Stellscheibe 7 andererseits weisen im wesentlichen identische Abmessungen auf, so dass sie sich zur Bildung von Abströmöffnungen überdecken können. Andererseits sind die Zwischensegmente 66, 76 des Ventilgrundkörpers 6 einerseits und der Stellscheibe 7 andererseits so ausgestaltet; dass sie die Durchgangsöffnungen 75, 65 der jeweils anderen dieser beiden Ventilbaugruppen 6, 7 vollständig überdecken und verschließen können, so dass das Ventil für den Durchlass von Gas gesperrt ist.

Die kreisringförmigen Ausschnitte 61, 71 des Ventilgrundkörpers 6 und der Stellscheibe 7 werden durchgriffen von dem Topf 20 des Gasgenerators 2 und sind dadurch derart abgedichtet, dass sie kein Abströmen von Gas aus dem Gassack 3 hinaus zulassen.

Der flache, ringförmige Körper 70 des Stellgliedes 7 besteht bevorzugt aus Metall, zum Beispiel Edelstahlblech, und weist an seinem inneren und äußeren Rand jeweils Vertiefungen 72, 73 in Form von Einbuchtungen auf, die mit den am inneren und äußeren Rand des Ventilgrundkörpers 6 nach innen abstehenden Vorsprüngen 62, 63 korrespondieren.

An dem Ventilgrundkörper 6 ist einstückig eine Aufnahme 8 mit einem hohlzylindrischen Aufnahmebereich 80 angeformt, in die eine pyrotechnische, Einheit 9 einsetzbar ist. Zur Fixierung der pyrotechnischen Einheit 9 in dem Aufnahmebereich 80 ist eine Überwurfmutter 84 vorgesehen. Die pyrotechnische Einheit 9 dient zur pyrotechnischen Erzeugung von Gas bei Zündung, wobei dem mittels der pyrotechnischen Einheit 9 freisetzbaren Gas an dem Ventilgrundkörper 7 ein Druckraum 81 zugeordnet ist, der durch einen Abschnitt des hohlzylindrischen Aufnahmebereiches 80 gebildet wird, der nicht von der pyrotechnischen Einheit 9 ausgefüllt ist.

Der Druckraum 81 wird seitlich überwiegend begrenzt durch die Innenwand 82 des hohlzylindrischen Aufnahmebereiches 80 des Ventilgrundkörpers 7 sowie an einer Seite zu einem Teil durch eine Druckangriffsfläche 77b der Stellscheibe 7, die senkrecht zu der Ebene verläuft, entlang der sich der Ventilgrundkörper 6 und die Stellscheibe 7 erstrecken. Demnach wird die seitliche Begrenzung des Druckraumes 81 überwiegend gebildet durch die Innenwand 82 der einstückig am Ventilgrundkörper 6 angeformten hohlzylindrischen Aufnahme 80 und zu einem kleineren Teil durch die Druckangriffsfläche 77b der Stellscheibe 7. Die Deckflächen des Druckraumes 81 werden einerseits begrenzt durch die pyrotechnische Einheit 9 unter Abdichtung mittels der Überwurfmutter 84 und auf der anderen, dem Gassack zugewandten Seite durch eine am Ventilgrundkörper 6 festgelegte Abdeckung 85. Zur Festlegung der Druckraumbdeckung 85 am Ventilgrundkörper 6 dienen von der Druckraumabdeckung 85 abstehenden Stifte 86, denen Befestigungsöffnungen 68 in Form von Durchgangsbohrungen am Ventilgrundkörper 6 zugeordnet sind.

Die pyrotechnische Einheit 9 bildet, im Zusammenwirken mit dem Druckraum 81, einen Auslösemechanismus zur Betätigung des Ventils V, wie nachfolgend bei der Beschreibung der Funktion des erfindungsgemäßen Airbagmoduls näher erläutert werden wird.

Neben dem Druckraum 81 und diesen teilweise begrenzend verläuft auf dem ringförmigen Körper 60 des Ventilgrundkörpers 6 in radialer Richtung ein Trennsteg 67, der einen Anschlag 67a bildet, dem wiederum ein Gegenanschlag 77a an dem ringförmigen Körper 70 der Stellscheibe 7 angeordnet ist. Dieser Gegenanschlag 77a liegt der Druckangriffsfläche 77b der Stellscheibe 7 gegenüber und begrenzt zusammen mit dieser eine Unterbrechung 77 in dem ringförmigen Körper 70 der Stellscheibe 7.

Die Festlegung des Ventils V an dem Airbagmodul erfolgt dadurch, dass der Ventilgrundkörper 6 und die zugeordnete Stellscheibe 7 zwischen dem Trägerblech 1 und dem hiermit verbundenen Haltering 5 unter Zwischenlage des Verstärkungsringes 31 des Gassackes 3 aufgenommen sind. Der am Trägerblech 1 befestigte Haltering 5 trägt somit bei zu der Befestigung mehrerer weiterer Komponenten des Airbagmoduls, nämlich des Gassackes 3, der Abdeckung 4 sowie des Ventils V. Der Gasgenerator 2 ist demgegenüber unabhängig von dem Haltering 5 an dem Ventilgrundkörper 6 befestigt:

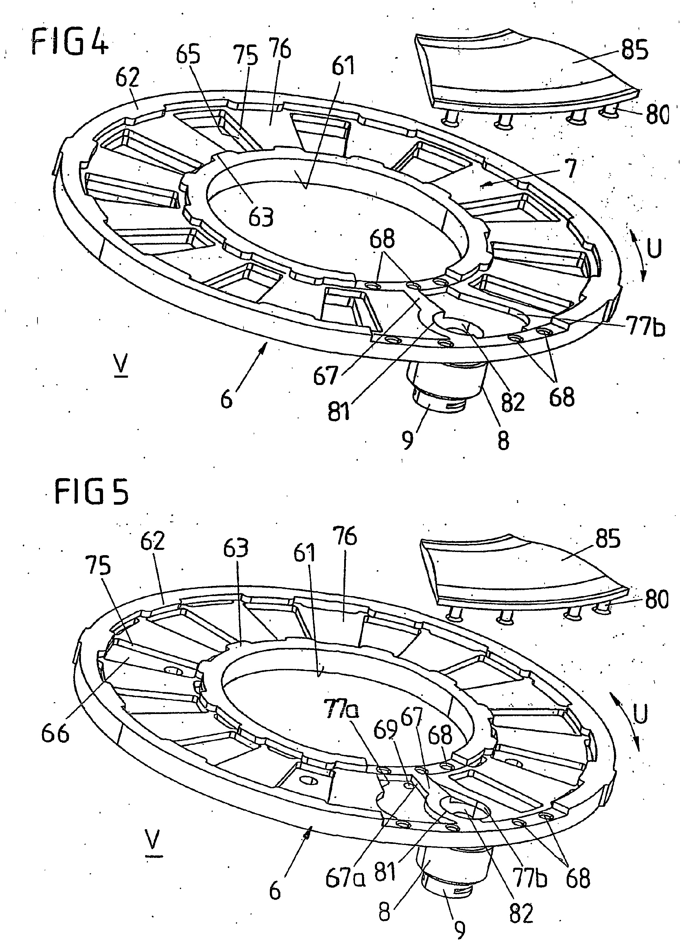

Es wird nun anhand der Figuren 4 bis 6 die Montage des Ventils V durch Zusammenbau des Ventilgrundkörpers 6, der Stellscheibe 7 und der Abdeckung 85 beschieben, wobei der dem Ventil V zugeordnete Auslösemechanismus 9 in Form einer pyrotechnischen Einheit in dem hohlzylindrischen Aufnahmebereich 80 der am Ventilgrundkörper 6 angeformten Aufnahme 8 vormontiert ist.

Gemäß Figur 4 wird zur Montage des Ventils V zunächst die Stellscheibe 7 auf den Ventilgrundkörper 6 geschoben, und zwar entlang einer Richtung im Wesentlichen senkrecht zu der Erstreckungsebene, entlang der sich der scheibenförmige Ventilgrundkörper 6 und die Stellscheibe 7 im montierten Zustand erstrecken. Dabei dienen die vom äußeren und inneren Rand des Ventilgrundkörpers 6 nach innen abstehenden Vorsprünge 62, 63 einerseits und die am inneren und äußeren Rand der Stellscheibe 7 vorgesehenen Vertiefungen 72, 73 andererseits als Montagehilfen, indem die Stellscheibe 7 derart auf den Ventilgrundkörper 6 gesetzt wird, dass die Vorsprünge 62, 63 und die Vertiefungen 72, 73 sich jeweils paarweise miteinander in Eingriff treten. Nach dem vollständigen Einlegen der Stellscheibe 7 in den Ventilgrundkörper 6, wie in Figur 4 dargestellt, übergreifen die nach innen abstehenden Vorsprünge 62, 63 des Ventilgrundkörpers 6 den ringförmigen Körper 70 der Stellscheibe 7, so dass diese an bzw. in dem Ventilgrundkörper 6 gelagert ist und dort geführt werden kann.

In dem in Figur 4 gezeigten Zustand unmittelbar nach dem Aufsetzen und Einlegen der Stellscheibe 7, wobei sich die Vorsprünge 62, 63 des Ventilgrundkörpers 6 noch oberhalb der Vertiefungen 72, 73 der Stellscheibe 7 befinden, überdecken sich die Durchgangsöffnungen 65, 75 des Ventilgrundkörpers 6 einerseits und der Stellscheibe 7 andererseits. Dies entspricht dem geöffneten Zustand des durch den Ventilgrundkörper 6 und die Stellscheibe 7 gebildeten Ventils V.

Zur weiteren Montage wird zunächst die Stellscheibe 7 bezüglich des Grundkörpers 6 derart entlang der Umfangsrichtung U gedreht, dass nun die Durchgangsöffnungen 65, 75 des Ventilgrundkörpers 6 einerseits und der Stellscheibe 7 andererseits durch die Zwischensegmente 76, 66 der jeweils anderen dieser beiden Baugruppen 6, 7 überdeckt sind. Dies entspricht dem geschlossenen Zustand des Ventils V, in dem keine Ausströmöffnungen gebildet sind, durch die hindurch Gas abströmen könnte, entsprechend Figur 5.

In dieser Position übergreifen die nach innen abstehenden Vorsprünge 62, 63 des Ventilgrundkörpers 6 die Zwischensegmente 76 der Stellscheibe 7, so dass die Stellscheibe 7 zuverlässig an dem Ventilgrundkörper 6 gehalten wird. Es handelt sich hierbei um einen Formschluss, bewirkt durch das Übergreifen der Zwischensegmente 76 der Stellscheibe 7 durch die nach innen abragenden Vorsprünge 62, 63 des Ventilgrundkörpers 6. Da die Vorsprünge 62, 63 hierbei sowohl vom inneren Rand als auch vom äußeren Rand des Ventilgrundkörpers 6 jeweils nach,innen abstehen, werden die Zwischensegmente 76 der Stellscheibe 7 sowohl an ihrem jeweiligen radial äußeren als auch an ihrem radial inneren Rand jeweils durch Vorsprünge 62 bzw. 63 des Ventilgrundkörpers 6 übergriffen. Hierdurch ist im späteren Betrieb des Ventils V bei einer (durch die pyrotechnische Einheit 9) ausgelösten Drehbewegung der Stellscheibe 7 bezüglich des Ventilgrundkörpers 6 sichergestellt,dass die Stellscheibe 7 zuverlässig am Ventilgrundkörper 6 geführt wird.

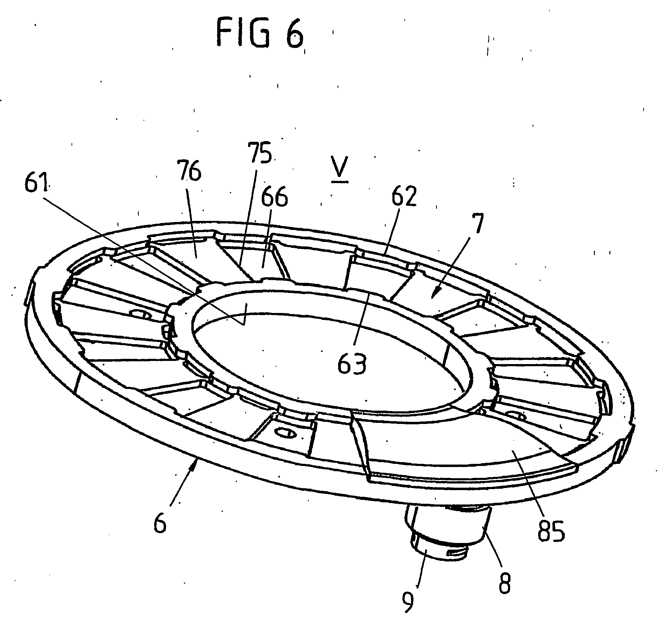

Abschließend wird gemäß Figur 6 die Druckraumabdeckung 85 derart auf die aus dem Ventilgrundkörper 6 und der Stellscheibe 7 bestehende Ventilbaugruppe V aufgesetzt, dass die von der Druckraumabdeckung 85 nach unten abstehenden Befestigungsstifte 86 in zugeordnete Befestigungsöffnungen 68 des Ventilgrundkörpers 6 eingreifen. Die Befestigungsstifte 86 werden dann in der jeweils zugeordneten Befestigungsöffnung 68 von der der Druckraumabdeckung 85 abgewandten Seite her vernietet und dadurch abschließend fixiert, vergleiche Figur 6.

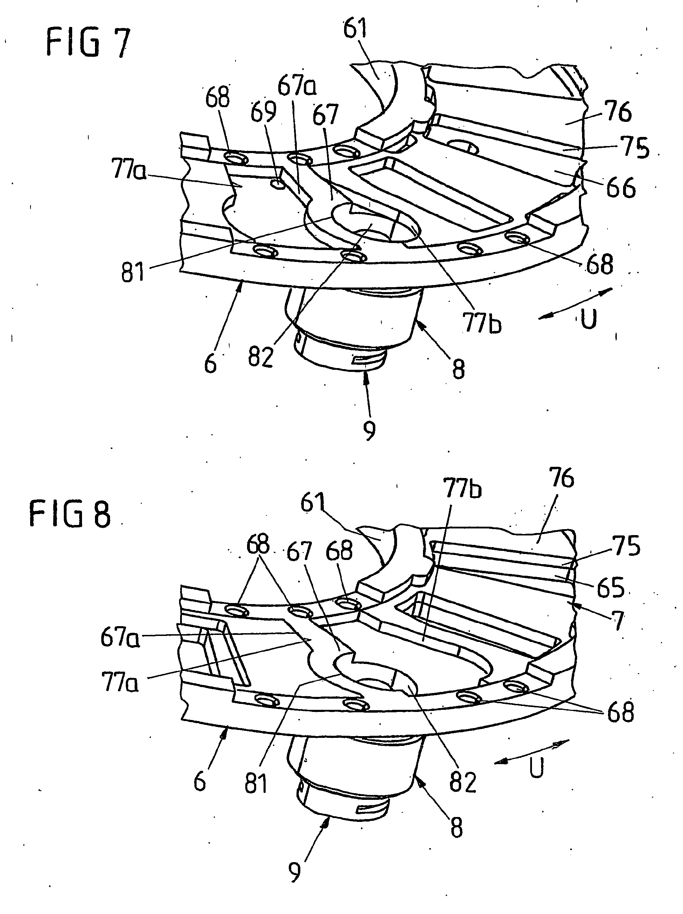

Es wird nun unter zusätzlicher Bezugnahme auf die Figuren 7 und 8 die Funktion der Ventilanordnung V beim Betrieb der in den Figuren 1 bis 6 dargestellten Airbageinrichtung beschrieben werden.

Kommt es aufgrund eines Unfalles zu einer plötzlichen, starken Verzögerung (negativen beschleunigung) eines Fahrzeugs, das mit einem Airbagmodul der in den Figuren 1 bis 3 dargestellten Art ausgerüstet ist, so wird der Gasgenerator 2 des Airbagmoduls durch einen zugeordneten Crash-Sensor ausgelöst und erzeugt Gas zum Aufblasen des zunächst noch als Gassackpaket vorliegenden Gassackes 3. Beim Aufblasen des Gassackes 3 entfaltet sich dieser, wobei die Basisfläche 40 der Abdeckung 4 des Airbagmoduls in definierter Weise aufreißt und eine Öffnung für den sich entfaltenden Gassack 3 freigibt. Hierzu sind in der Basisfläche 40 der Abdeckung 4 in bekannter Weise Sollbruchlinien (Reißlinien) vorgesehen. Durch die freigegebene Öffnung hindurch entfaltet sich der Gassack 3 entlang einer vorgegebenen Richtung vor dem Körper eines zu schützenden Fahrzeuginsassen.

In Abhängigkeit von der aktuellen Position, der Größe, dem Gewicht, der Relativbewegung bezüglich des Fahrzeuginnenraums und weiterer Parameter, die den zu schützenden Fahrzeuginsassen charakterisieren, kann es für einen optimalen Schutz des jeweiligen Insassen vorteilhaft sein, ein Teil des aus dem Gasgenerator 2 in den Gassack einströmenden Gases abzulassen. Hierzu ist das Ventil V vorgesehen, das sich mittels der pyrotechnischen Einheit 9 betätigen lässt. Die pyrotechnische Einheit 9 steht wiederum in bekannter Weise mit Sensoren in Verbindung, mit denen die zur Steuerung des Ventils V dienenden Parameter, wie z. B. die Größe und das Gewicht eines Fahrzeuginsassen sowie dessen Position, erfassbar sind.

Wird die als Auslösemechanismus für das Ventil V dienende pyrotechnische Einheit 9 durch Ausgangssignale der zugeordneten Sensoren gezündet, so wird pyrotechnisch ein Gas erzeugt und freigesetzt, das zu einer Druckerhöhung in dem Druckraum 81 des Ventilgrundkörpers 6 führt. Das Ventil V befindet sich zu diesem Zeitpunkt noch in der anhand Figur 7 erkennbaren Ausgangsstellung, in der die Zwischensegmente 66, 76 des Ventilgrundkörpers 6 bzw. der Stellscheibe 7 die Durchgangsöffnungen 75, 65 der jeweils anderen der beiden Ventilbaugruppen 6, 7 verschließen. In diesem Zustand bildet gemäß Figur 7, in der die Druckraumabdeckung 85 zur besseren Erkennbarkeit der Details des Druckraumes 81 nicht mit dargestellt ist, die Druckangriffsfläche 77b der Stellscheibe 7 zusammen mit der Innenwand 82 des an dem Ventilgrundkörper 6 angeformten Aufnahmebereiches 80 die innere Seitenwand des Druckraumes 81. Unter der Wirkung des in dem Druckraum 81 erzeugten Druckes, der an der Druckangriffsfläche 77b der Stellscheibe 7 angreift, dreht sich die Stellscheibe 7 relativ zu dem Ventilgrundkörper 6 (entgegen dem Uhrzeigersinn). Dies wird ermöglicht durch die bewegliche Führung der Stellscheibe 7 an dem Ventilgrundkörper 6 mittels der dort vom äußeren und inneren Rand nach innen abragenden Vorsprünge 62, 63.

Demnach bilden der Ventilgrundkörper 6 (einschließlich der Druckraumabdeckung 85) und die Stellscheibe 7 eine Kolben-Zylinder-Einheit mit der Stellscheibe 7 als Rotationskolben.

Die mögliche Rotationsbewegung der Stellscheibe 7 bezüglich des Ventilgrundkörpers 6 wird begrenzt durch die der Druckangriffsfläche 77b gegenüberliegende Anschlagsfläche (Gegenanschlag 77a) der Stellscheibe 7, die aufgrund der Drehbewegung der Stellscheibe 7 bezüglich des Ventilgrundkörpers 6 mit dem am radial verlaufenden Trennsteg 67 des Ventilgrundkörpers 6 vorgesehenen Anschlag 67a in Eingriff tritt, vergleiche Figur 8 (in der die Druckraumabdeckung 85 ebenfalls nicht mit dargestellt ist).

Durch diese begrenzte Drehbewegung hat die Stellscheibe 7 eine Relativposition bezüglich des Ventilgrundkörpers 6 eingenommen, in der sich gemäß Figur 8 die Durchgangsöffnungen 65, 75 des Ventilgrundkörpers 6 und der Stellscheibe 7 überdecken, so dass sie Ausströmöffnungen bilden, durch die hindurch Gas aus dem Gassack 3 in einer Richtung weg von dem zu schützenden Insassen (entgegengesetzt zur Entfaltungsrichtung des Gassackes 3 durch eine Öffnung in der Basisfläche 40 der Abdeckung 4 hindurch) abströmen kann.

Da bei der begrenzten Drehbewegung der Stellscheibe 7 bezüglich des Ventilgrundkörpers 6 die den Gegenanschlag 71a bildende Anschlagfläche der Stellscheibe 7 sich dem zugeordneten Anschlag 67a am radialen Trennsteg 67 des Ventilgrundkörpers zunehmend annähert, kommt es in dem Bereich zwischen den beiden Anschlägen 67a, 77a zu einem Druckanstieg; denn der von diesen beiden Anschlägen 67a, 77a begrenzte Raum ist zusätzlich nach unten durch den Ringkörper 60 des Ventilgrundkörpers 6 und nach oben durch die Druckraumabdeckung 85 verschlossen. Um die Bewegung der Stellscheibe 7 bis zu einem Zusammentreffen der beiden Anschläge 67a, 77a nicht zu behindern, ist daher vor dem Anschlag 67a am radialen Trennsteg 67 des Ventilgrundkörpers 6 eine Druckentlastungsöffnung 69 vorgesehen.

Der Abstand zwischen der Druckangriffsfläche 77b der Stellscheibe 7 und der gegenüberliegenden, den Gegenanschlag 77a bildenden Anschlagfläche, die zusammen eine Unterbrechung 77 der Stellscheibe 7 beidseitig begrenzen, ist in Umfangsrichtung U so gewählt, dass beim Abschluss der Relativbewegung der Stellscheibe 7 bezüglich des Ventilgrundkörpers 6 (welcher durch das Zusammentreffen der beiden Anschläge 67a, 77a am Ventilgrundkörper 6 und an der Stellscheibe 7 bestimmt, wird) die Durchgangsöffnungen 65, 75 an Ventilgrundkörper 6 und Stellscheibe 7 sich vollständig überdecken und somit ein maximaler Abströmquerschnitt für aus dem Gassack 3 abströmendes Gas zur Verfügung steht.

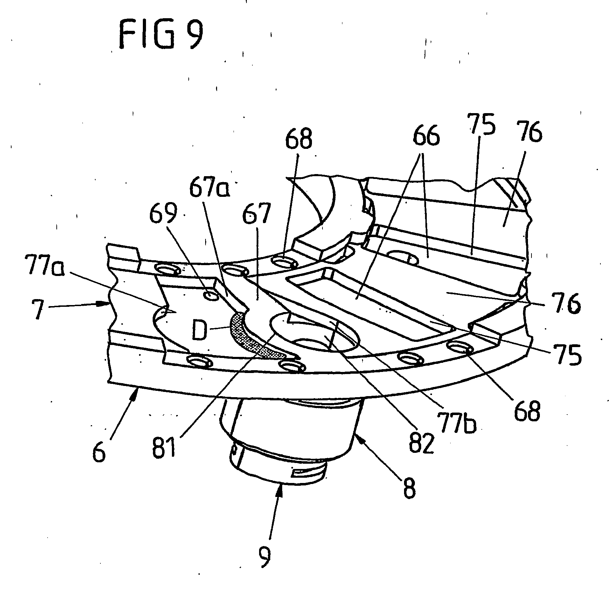

Figur 9 zeigt eine Weiterbildung des Ventils V im Bereich des Druckraumes 81. Ausgangspunkt für die Weiterbildung ist das Problem, dass beim Aufprall der Stellscheibe 7 mit ihrem Gegenanschlag 77a auf den zugeordneten Anschlag 67a des Ventilgrundkörpers 6 mit hoher Geschwindigkeit (hervorgerufen durch den mittels der pyrotechnischen Einheit erzeugten Druck) eine Rückstellbewegung der Stellscheibe 7 verursacht werden könnte, die die Tendenz hat, die Überdeckung der Durchgangsöffnungen 65, 75 des Ventilgrundkörpers 6 und der Stellscheibe 7 wieder aufzuheben und die entsprechenden Durchgangsöffnungen 65, 75 zumindest teilweise wieder zu verschließen.

Aus diesem Grund ist bei der in Figur 9 gezeigten Weiterbildung der erfindungsgemäßen Ventilanordnung V vor dem grundkörperseitigen Anschlag 67a ein Deformationselement D angeordnet, das vor dem Aufprall der Stellscheibe 7 im Bereich ihrer Anschlagfläche 77a auf den zugeordneten Anschlag 67a des Ventilgrundkörpers 6 deformiert wird und hierdurch die Bewegung der Stellscheibe 7 abbremst.

Bei dem Deformationselement D kann es sich beispielsweise um einen Draht handeln, der beim Auftreffen des Gegenanschlags 77a der Stellscheibe 7 deformiert wird und dessen nach unten abgewinkelte Enden in zugeordnete Bohrungen des Ventilgrundkörpers 6 eingehängt sind.

## Patentansprüche

1. Airbageinrichtung für ein Kraftfahrzeug mit
- einem aufblasbaren Gassack (3),
- einem Gasgenerator (2) zum Aufblasen des Gassackes (3),
- einem Ventil (V) zum Ablassen von Gas aus dem Gassack (3),
- einem Grundkörper (6) des Ventils (V),
- einem beweglichen Stellglied (7) des Ventils (V), das zum Öffnen des Ventils betätigbar ist, und
- einem Auslösemechanismus zum Betätigen des Stellgliedes (7) durch Erzeugung von Druck,
wobei als Auslösemechanismus eine sensorgesteuerte pyrotechnische Einheit (9) dient, die zur Betätigung des Stellgliedes (7) ein Druckgas freisetzt, wobei das freigesetzte Druckgas in einen Druckraum (81) des Grundkörpers (6) des Ventils gelangt, wobei bei dem Druckraum (81) eine Begrenzungswand (77b, 82) zumindest teilweise durch die Druckangriffsfläche (77b) des Stellgliedes (7) gebildet wird und das Druckgas unmittelbar auf eine Druckangriffsfläche (77b) des Stellgliedes (7) einwirkt, wobei
die Bewegung des Stellgliedes (7) relativ zu dem Grundkörper (6) unter der Wirkung der vom Auslösemechanismus (9) freigesetzten Gase durch einander zugeordnete Anschläge (67a, 77a) des Grundkörpers (6) und des Stellgliedes (7) begrenzt wird, **dadurch gekennzeichnet, dass** der Anschlag (67a) des Grundkörpers (6) durch einen Trennsteg (67) gebildet wird, der auf dem Grundkörper (6) des Ventils (V) verläuft und der den Druckraum (81) teilweise begrenzt.

2. Airbageinrichtung nach Anspruch 1, **dadurch gekennzeichnet, dass** der Grundkörper (6) und das Stellglied (7) jeweils mit Durchgangsöffnungen (65, 75) versehen sind und dass das Stellglied (7) durch Betätigung mittels des Auslösemechanismus (9) derart relativ zu dem Grundkörper (6) positionierbar ist, dass die Durchgangsöffnungen (65, 75) des Grundkörpers (6) und des Stellgliedes (7) einander zumindest teilweise überdecken und das Ventil (V) zum Ablassen von Gas geöffnet ist.

3. Airbageinrichtung nach Anspruch 2, **dadurch gekennzeichnet, dass** vor Betätigung des Stellgliedes (7) mittels des Auslösemechanismus (9) die Durchgangsöffnungen (65) des Grundkörpers (6) durch das Stellglied (7) abgedeckt sind, so dass das Ventil (V) verschlossen ist.

4. Airbageinrichtung nach Anspruch 2 oder 3, **dadurch gekennzeichnet, dass** der Druckraum (81) zumindest teilweise einerseits durch den Grundkörper (6) und andererseits durch das Stellglied (7) des Ventils (V) begrenzt wird.

5. Airbageinrichtung nach einem der Ansprüche 2 bis 4, **dadurch gekennzeichnet, dass** der Druckraum (81) am Grundkörper (6) ausgebildet und zusätzlich teilweise durch die Druckangriffsfläche (77b) des Stellgliedes (7) begrenzt ist.

6. Airbageinrichtung nach einem der Ansprüche 2 bis 5, **dadurch gekennzeichnet, dass** der Grundkörper (6) und das Stellglied (7) jeweils scheibenförmig ausgebildet sind.

7. Airbageinrichtung nach Anspruch 6, **dadurch gekennzeichnet, dass** die Druckangriffsfläche (77b) im Wesentlichen senkrecht zur Erstreckungsebene des Grundkörpers (6) und des Stellgliedes (7) verläuft.

8. Airbageinrichtung nach einem der vorhergehenden Ansprüche, **dadurch gekennzeichnet, dass** das Stellglied (7) am Grundkörper (6) geführt ist und dabei bevorzugt formschlüssig an diesem gehalten wird.

9. Airbageinrichtung nach einem der Ansprüche 2 bis 8, **dadurch gekennzeichnet, dass** der Grundkörper (6) und das Stellglied (7) einander zugeordnete Vorsprünge (62, 63) und Einbuchtungen (72, 73) aufweisen, die als Montagehilfe beim Zusammenbau des Ventils (V) aus Grundkörper (6) und Stellglied (7) dienen.

10. Airbageinrichtung nach Anspruch 8 oder 9, **dadurch gekennzeichnet, dass** Vorsprünge (62, 63) des Grundkörpers (6) zur Führung des Stellgliedes (7) am Grundkörper (6) dienen.

11. Airbageinrichtung nach einem der Ansprüche 2 bis 10, **dadurch gekennzeichnet, dass** vor einem der Anschläge (67a, 77a) ein Deformationselement (69) angeordnet ist, um vor dem Zusammentreffen der beiden Anschläge (67a, 77a) das Stellglied (7) abzubremsen, wobei das Deformationselement (69) deformiert wird.

12. Airbageinrichtung nach Anspruch 6, **dadurch gekennzeichnet, dass** das Stellglied (7) eine Unterbrechung (77) aufweist, die einerseits durch den stellgliedseitigen Anschlag (77a) und andererseits durch die Druckangriffsfläche (77b) begrenzt wird, um eine Bewegung des Stellgliedes (7) unter der Wirkung des Auslösemechanismus (9) zu ermöglichen, die durch das Auftreffen des stellgliedseitigen Anschlages (77a) auf den grundkörperseitigen Anschlag (67a) beendet wird.

13. Airbageinrichtung nach einem der vorhergehenden Ansprüche, **dadurch gekennzeichnet, dass** die Druckangriffsfläche (77b) des Stellgliedes (7) sich im Wesentlichen senkrecht zu der Bewegungsrichtung des Stellgliedes (7) unter der Wirkung der von dem Auslösemechanismus (9) freigesetzten Gase erstreckt.

14. Airbageinrichtung nach einem der vorhergehenden Ansprüche, **dadurch gekennzeichnet, dass** die Airbageinrichtung eine Abdeckung (4) aufweist, die mit einer Basisfläche (40) eine Öffnung abdeckt, durch die hindurch sich der Gassack (3) beim Aufblasen entfalten kann, und dass das Ventil (V) auf der der Basisfläche (40) der Abdeckung (4) gegenüberliegenden Seite der Airbageinrichtung angeordnet ist.

15. Airbageinrichtung nach einem der vorhergehenden Ansprüche, **dadurch gekennzeichnet, dass** ein Haltering (5) zur Befestigung des Gassackes (3) an der Airbageinrichtung vorgesehen ist.

16. Airbageinrichtung nach einem der vorhergehenden Ansprüche, **dadurch gekennzeichnet, dass** entlang des Randes eines Einblasmundes (30) des Gassackes (3) ein Verstärkungselement (31), insbesondere in Form eines Ringes, verläuft, um den Rand des Einblasmundes (30) in einer definierten Geometrie zu halten.

17. Airbageinrichtung nach Anspruch 15 und 16, **dadurch gekennzeichnet, dass** der Haltering (5) das Verstärkungselement (31) übergreift.

18. Airbageinrichtung nach Anspruch 15 oder 17, **dadurch gekennzeichnet, dass** der Haltering (5) durch Befestigungsmittel (13), insbesondere in Form von Schrauben, an eine Baugruppe (1) festgelegt ist.

19. Airbageinrichtung nach Anspruch 18, **dadurch gekennzeichnet, dass** der Haltering (5) an einem tragenden Element (1), insbesondere in Form eines Trägerbleches, der Airbageinrichtung befestigt ist.

20. Airbageinrichtung nach Anspruch 15, 16 oder 18, **dadurch gekennzeichnet, dass** der Haltering (5) zur Festlegung des Ventils (V) an der Airbageinrichtung dient.

21. Airbageinrichtung nach Anspruch 18 oder 19 und Anspruch 20, **dadurch gekennzeichnet, dass** das Ventil (V) zwischen der Baugruppe (1) der Airbageinrichtung und dem Haltering (5) aufgenommen ist.

22. Airbageinrichtung nach einem der Ansprüche 15 bis 21, **dadurch gekennzeichnet, dass** die Abdeckung (4) der Airbageinrichtung am Haltering (5) festgelegt ist.

23. Airbageinrichtung nach Anspruch 22, **dadurch gekennzeichnet, dass** die Abdeckung (4) der Airbageinrichtung am Haltering (5) durch ineinandergreifende Formschlusselemente (52, 42), insbesondere in Form von Rastelementen, festgelegt ist.

## Claims

1. Airbag device for a motor vehicle, with
- an inflatable gas bag (3),
- a gas generator (2) for inflating the gas bag (3),
- a valve (V) for letting gas out of the gas bag (3),
- a basic body (6) of the valve (V),
- a moveable actuating element (7) of the valve (V), which can be actuated in order to open the valve, and
- a triggering mechanism for actuating the actuating element (7) by generating pressure,
a sensor-controlled, pyrotechnic unit (9) serving as triggering mechanism and releasing a compressed gas in order to actuate the actuating element (7), the released compressed gas passing into a pressure space (81) of the basic body (6) of the valve, with, in the case of the pressure space (81), a boundary wall (77b, 82) being at least partially formed by the pressure application surface (77b) of the actuating element (7) and the compressed gas acting directly on a pressure application surface (77b) of the actuating element (7),
the movement of the actuating element (7) relative to the basic body (6) under the action of the gases released by the triggering mechanism (9) being restricted by mutually assigned stops (67a, 77a) of the basic body (6) and of the actuating element (7), **characterized in that** the stop (67a) of the basic body (6) is formed by a separating web (67) which runs on the basic body (6) of the valve (V) and which partially bounds the pressure space (81).

2. Airbag device according to claim 1, **characterized in that** the basic body (6) and the actuating element (7) are each provided with through openings (65, 75), and **in that** the actuating element (7) can be positioned, by actuation by means of the triggering mechanism (9), relative to the basic body (6) in such a manner that the through openings (65, 75) of the basic body (6) and of the actuating element (7) at least partially cover each other and the valve (V) is opened in order to let out gas.

3. Airbag device according to claim 2, **characterized in that** before actuation of the actuating element (7) by means of the triggering mechanism (9), the through openings (65) of the basic body (6) are covered by the actuating element (7), so that the valve (V) is closed.

4. Airbag device according to claim 2 or 3, **characterized in that** the pressure space (81) is bounded at least partially on one side by the basic body (6) and on the other side by the actuating element (7) of the valve (V).

5. Airbag device according to one of claims 2 to 4, **characterized in that** the pressure space (81) is formed on the basic body (6) and is additionally partially bounded by the pressure application surface (77b) of the actuating element (7).

6. Airbag device according to one of claims 2 to 5, **characterized in that** the basic body (6) and the actuating element (7) are in each case of disc-shaped design.

7. Airbag device according to claim 6, **characterized in that** the pressure application surface (77b) runs essentially perpendicularly to the plane of extent of the basic body (6) and of the actuating element (7).

8. Airbag device according to one of the preceding claims, **characterized in that** the actuating element (7) is guided on the basic body (6) and is preferably held in a form-fitting manner on the latter.

9. Airbag device according to one of claims 2 to 8, **characterized in that** the basic body (6) and the actuating element (7) have mutually assigned projections (62, 63) and indentations (72, 73) which serve as an installation aid during the assembly of the valve (V) from basic body (6) and actuating element (7).

10. Airbag device according to claim 8 or 9, **characterized in that** projections (62, 63) of the basic body (6) serve to guide the actuating element (7) on the basic body (6).

11. Airbag device according to one of claims 2 to 10, **characterized in that** a deformation element (69) is arranged in front of one of the stops (67a, 77a) in order to brake the actuating element (7) before it meets the two stops (67a, 77a), with the deformation element (69) being deformed.

12. Airbag device according to claim 6, **characterized in that** the actuating element (7) has an interruption (77) which is bounded on one side by the actuating-element stop (77a) and on the other side by the pressure application surface (77b), in order to permit a movement of the actuating element (7) under the action of the triggering mechanism (9), which movement is ended by the actuating-element stop (77a) striking against the basic-body stop (67a).

13. Airbag device according to one of the preceding claims, **characterized in that** the pressure application surface (77b) of the actuating element (7) extends essentially perpendicularly to the direction of movement of the actuating element (7) under the action of the gases released by the triggering mechanism (9).

14. Airbag device according to one of the preceding claims, **characterized in that** the airbag device has a covering (4) which uses a base surface (40) to cover an opening through which the gas bag (3) can deploy upon inflation, and **in that** the valve (V) is arranged on that side of the airbag device which is opposite the base surface (40) of the covering (4).

15. Airbag device according to one of the preceding claims, **characterized in that** a retaining ring (5) is provided for fastening the gas bag (3) to the airbag device.

16. Airbag device according to one of the preceding claims, **characterized in that** a reinforcing element (31), in particular in the form of a ring, runs along the edge of a blow-in mouth (30) of the gas bag (3) in order to keep the edge of the blow-in mouth (30) to a defined geometry.

17. Airbag device according to claims 15 and 16, **characterized in that** the retaining ring (5) engages over the reinforcing element (31).

18. Airbag device according to claim 15 or 17, **characterized in that** the retaining ring (5) is fixed to a subassembly (1) by fastening means (13), in particular in the form of screws.

19. Airbag device according to claim 18, **characterized in that** the retaining ring (5) is fastened to a supporting element (1), in particular in the form of a support plate, of the airbag device.

20. Airbag device according to claim 15, 16 or 18, **characterized in that** the retaining ring (5) serves to fix the valve (V) to the airbag device.

21. Airbag device according to claim 18 or 19 and claim 20, **characterized in that** the valve (V) is accommodated between the subassembly (1) of the airbag device and the retaining ring (5).

22. Airbag device according to one of claims 15 to 21, **characterized in that** the covering (4) of the airbag device is fixed to the retaining ring (5).

23. Airbag device according to claim 22, **characterized in that** the covering (4) -of the airbag device is fixed to the retaining ring (5) by interengaging form-fitting elements (52, 42), in particular in the form of latching elements.

## Revendications

1. Système à airbag pour un véhicule automobile, comprenant :
- un sac à gaz gonflable (3),
- un générateur de gaz (2) pour gonfler le sac à gaz (3),
- une valve (V) pour laisser échapper le gaz hors du sac à gaz (3),
- un corps de base (6) pour la valve (V),
- un organe de positionnement mobile (7) de la valve (V), susceptible d'être actionné pour ouvrir la valve, et
- un mécanisme de déclenchement pour actionner l'organe de positionnement (7) par génération d'une pression,
dans lequel on utilise, à titre de mécanisme de déclenchement, une unité pyrotechnique (9) commandée par un capteur, laquelle dégage un gaz sous pression pour l'actionnement de l'organe de positionnement (7), le gaz sous pression dégagé parvenant dans une chambre à pression (81) du corps de base (6) de la valve, et es car de la chambre à pression (81) une paroi de limitation (77b, 82) est formée au moins partiellement par la surface (77b) de l'organe de positionnement (7) qui est attaquée par la pression, et le gaz sous pression agit directement sur une surface (77b) de l'organe de positionnement (7) qui est attaquée par la pression, le mouvement de l'organe de positionnement (7) par rapport au corps de base (6) sous l'action du gaz dégagé par le mécanisme de déclenchement (9) étant limité par des butées (67a, 77a) mutuellement associées du corps de base (6) et de l'organe de positionnement (7),
**caractérisé en ce que** la butée (67a) du corps de base (6) est formée par une barrette de séparation (67) qui s'étend sur le corps de base (6) de la valve (V) et qui limite partiellement la chambre à pression (81).

2. Système à airbag selon la revendication 1, **caractérisé en ce que** le corps de base (6) et l'organe de positionnement (7) sont dotés chacun d'ouvertures traversantes (65, 75), et **en ce que** l'organe de positionnement (7) est susceptible d'être positionné, par actionnement au moyen du mécanisme de déclenchement (9), par rapport au corps de base (6) de telle manière que les ouvertures traversantes (65,75) du corps de base (6) et de l'organe de positionnement (7) se recouvrent mutuellement au moins partiellement, et **en ce que** la valve (V) est ouverte pour laisser échapper le gaz.

3. Système à airbag selon la revendication 2, **caractérisé en ce qu'**avant d'actionner l'organe de positionnement (7) au moyen du mécanisme de déclenchement (9), les ouvertures traversantes (65) du corps de base (6) sont recouvertes par l'organe de positionnement (7) de telle sorte que la valve (V) est fermée.

4. Système à airbag selon la revendication 2 ou 3, **caractérisé en ce que** la chambre à pression (81) est limitée au moins partiellement d'une part par le corps de base (6) et d'autre part par l'organe de positionnement (7) de la valve (V).

5. Système à airbag selon l'une des revendications 2 à 4, **caractérisé en ce que** la chambre à pression (81) est réalisée dans le corps de base (6) et **en ce qu'**elle est limitée additionnellement partiellement par la surface (77b) de l'organe de positionnement (7) qui est attaquée par la pression.

6. Système à airbag selon l'une des revendications 2 à 5, **caractérisé en ce que** le corps de base (6) et l'organe de positionnement (7) sont réalisés chacun en forme de disque.

7. Système à airbag selon la revendication 6, **caractérisé en ce que** la surface (77b) qui est attaquée par la pression s'étend sensiblement perpendiculairement au plan d'extension du corps de base (6) et de l'organe de positionnement (7).

8. Système à airbag selon l'une des revendications précédentes,
**caractérisé en ce que** l'organe de positionnement (7) est guidé sur le corps de base (6) et est ici maintenu sur celui-ci, de préférence par coopération de formes.

9. Système à airbag selon l'une des revendications 2 à 8, **caractérisé en ce que** le corps de base (6) et l'organe de positionnement (7) présentent des saillies (62, 63) et des creux (72, 73) mutuellement associés, qui servent d'aide au montage lors de l'assemblage de la valve (V) formée du corps de base (6) et de l'organe de positionnement (7).

10. Système à airbag selon la revendication 8 ou 9, **caractérisé en ce que** les saillies (62, 63) du corps de base (6) servent au guidage de l'organe de positionnement (7) sur le corps de base (6).

11. Système à airbag selon l'une des revendications 2 à 10, **caractérisé en ce qu'**un élément à déformation (69) est agencé devant l'une des butées (67a, 77a) afin de freiner l'organe de positionnement (7) avant la rencontre des deux butées (67a, 77a), lors de quoi l'élément à déformation (69) est déformé.

12. Système à airbag selon la revendication 6, **caractérisé en ce que** l'organe de positionnement (7) comporte une interruption (77) qui est limitée d'une part par la butée (77a) côté organe de positionnement et d'autre part par la surface (77b) qui est attaquée par la pression, afin de permettre un déplacement de l'organe de positionnement (7) sous l'action du mécanisme de déclenchement (9), ce déplacement étant terminé par la rencontre de la butée (77a) côté organe de positionnement contre la butée (67a) côté corps de base.

13. Système à airbag selon l'une des revendications précédentes, **caractérisé en ce que** la surface (77b) de l'organe de positionnement (7) qui est attaquée par la pression s'étend sensiblement perpendiculairement à la direction de déplacement de l'organe de positionnement (7) sous l'action des gaz dégagés par le mécanisme de déclenchement (9).

14. Système à airbag selon l'une des revendications précédentes, **caractérisé en ce que** le système à airbag comprend une couverture (4) qui recouvre, par une surface de base (40), une ouverture à travers laquelle le sac à gaz (3) peut se déployer lors du gonflage, et **en ce que** la valve (V) est agencée sur le côté du système à airbag qui se trouve à l'opposé de la surface de base (40) de la couverture (4).

15. Système à airbag selon l'une des revendications précédentes, **caractérisé en ce qu'**il est prévu une bague de retenue (5) pour la fixation du sac à gaz (3) sur le système à airbag.

16. Système à airbag selon l'une des revendications précédentes, **caractérisé en ce qu'**un élément de renforcement (31), en particulier sous la forme d'une bague, s'étend le long de la bordure d'une embouchure de gonflage (30) du sac à gaz (3) pour maintenir la bordure de l'embouchure de gonflage (30) sous une géométrie définie.

17. Système à airbag selon les revendications 15 et 16, **caractérisé en ce que** la bague de retenue (5) coiffe l'élément de renforcement (31).

18. Système à airbag selon la revendication 15 ou 17, **caractérisé en ce que** la bague de retenue (5) est immobilisée par des moyens de fixation (13), en particulier sous la forme de vis, sur un groupe structurel (1).

19. Système à airbag selon la revendication 18, **caractérisé en ce que** la bague de retenue (5) est fixée sur un élément portant (1), en particulier sous la forme d'une tôle portante, du système à airbag.

20. Système à airbag selon la revendication 15, 16 ou 18, **caractérisé en ce que** la bague de retenue (5) sert à immobiliser la valve (V) sur le système à airbag.

21. Système à airbag selon la revendication 18 ou 19 et la revendication 20, **caractérisé en ce que** la valve (V) est reçue entre le groupe structurel (1) du système à airbag et la bague de retenue (5).

22. Système à airbag selon l'une des revendications 15 à 21, **caractérisé en ce que** la couverture (4) du système à airbag est fixée sur la bague de retenue (5).

23. Système à airbag selon la revendication 22, **caractérisé en ce que** la couverture (4) du système à airbag est fixée sur la bague de retenue (5) par des éléments à la coopération de forme (52,42) en engagement réciproque, en particulier sous la forme d'éléments d'enclenchement.
